# EUROPÄISCHE PATENTSCHRIFT

(11) **EP 1 616 778 B1**
(45) Veröffentlichungstag und Bekanntmachung des Hinweises auf die Patenterteilung: **19.07.2006**
(21) Anmeldenummer: 05014518.4
(22) Anmeldetag: 05.07.2005
(51) Int. Cl.: B62D 53/06, B60J 7/06

(54) **Fahrzeug zum Transport überbreiter Güter**
Broad load transporting vehicle
Véhicule pour le transport de marchandises larges

(30) Priorität: 07.07.2004 DE 102004032969; 06.08.2004 DE 102004038296
(43) Veröffentlichungstag der Anmeldung: 18.01.2006
(73) Patentinhaber: Kurt Dinkel Karosserie-Fahrzeugbau GmbH, 09618 Brand-Erbisdorf (DE)
(72) Erfinder: Dinkel, Christoph, 97877 Wertheim (DE)
(74) Vertreter: Helling, Siegfried

(56) Entgegenhaltungen:
- EP-A- 0 551 159
- EP-A- 0 879 721
- AU-B2- 518 007
- DE-A1- 3 405 259
- DE-A1- 4 321 271
- US-A- 3 482 716

## Beschreibung

Die Erfindung ist für die Fahrzeugindustrie relevant, die Fahrzeuge mit Planenverdeck für den Transport überbreiter Güter herstellt.

Zum Transport überbreiter Güter werden meist Tieflader, wie in DE 34 05 259 beschrieben, oder Fahrzeuge mit einer freien Ladefläche verwendet. Sollen überbreite Ladungen gegen Witterungseinflüsse oder anderweitigen Gründen geschützt befördert werden, so bedarf es Fahrzeuge, deren Breite zu mindest im hinteren Ladebereich vergrößert werden kann. Schwierigkeiten treten bei Fahrzeugen mit Schiebe-/Faltdach auf, da der hintere Portalträger aus seiner Funktionsstellung zu entfernen ist, was jedoch, wie DE 19 721 333 bzw. EP 879 721 beschreibt, durch lösbare Verbindung an das Schiebe-/Faltdach ermöglicht wird. Einweiteres Problem stellen die seitlichen Dachlängsträger mit ihrer Nebenfunktion als Führung für das bewegliche Dach sowie die Heckholme dar. Nach dem Stand der Technik wird das Problem dadurch gelöst, dass das Dach bis zum Ende aufgefahren wird, die seitlichen Dachlängsträger etwa auf halber Länge mit einem Gelenk versehen sind, bzw. die Elastizität des Dachlängsträgers ein seitliches begrenztes Ausbiegen gestattet, und somit die Möglichkeit besteht, zur Be- oder Entladung zumindest einen Heckholm und den hinteren Teil des auf dem Holm angelenkten Dachlängsträger seitlich auszufahren. Die Seitenplane hängt gardinenartig am Dachlängsträger. Nach dem Beladen wird der Heckholm mit dem hinteren Dachlängsträgerteil wieder in seine ursprüngliche Lage gebracht, wobei sich die Seitenplane über das überbreite Transportgut baucht. Anschließend kann das Dach geschlossen werden. Nachteil des Standes der Technik ist, dass nur ein beschränkter Teil der Ladefläche nutzbar ist, denn ein Teil der seitlichen Dachlängsträger muss zur Aufnahme des Daches parallel über der Ladefläche verbleiben. Bei einer seitlichen Beladung bei angehobenem Dach treten gravierende Nachteile durch erschwerte Handhabung der Seitenplanen und den größeren Platzbedarf für das zu belandende Fahrzeug auf.

Die Erfindung hat die Aufgabe, die oben genannten Probleme zu lösen und möglichst viel Ladefläche für den Transport überbreiter Ladungen bereit zu stellen.

Erfindungsgemäß wird die Aufgabe, wie in den Ansprüchen 1 bis 10 dargelegt, gelöst, indem die seitlichen Dachlängsträger, die sich zweckentsprechend über den gesamten Laderaum erstrecken und u.a. als Laufschienen für das bewegliche Dach dienen, durch separate Dachlaufschienen für das Dach über das Fahrerhaus verlängert werden. Somit kann das Dach, einschließlich des Heckportalelementes, beim Öffnen bis über das Fahrerhaus gefahren oder geschoben werden, gibt somit die gesamte Ladefläche frei und lagert nicht mehr auf den seitlichen Dachlängsträgern. Nunmehr kann mindestens ein seitlicher Dachlängsträger, der ja keinen Verbund mit den separaten Dachlaufschienen über dem Fahrerhaus aufweist, einschließlich mindestens eines Eckholms und der Seitenplane, in Querrichtung zur Fahrzeuglängsachse auf die für eine Be-/Entladung gewünschte Überbreite verbracht werden. Erfindungsgemäß kann das durch Ausfahren mittels Gleitelemente geschehen. Je nach Form und Lage des Schwerpunktes des überbreiten Transportgutes können beide Längsträger oder nur einer seitlich zur Verbreiterung bewegt werden. Das Ausfahren des oder der Dachlängsträger kann parallel oder auch trapezförmig zur Fahrzeuglängsachse erfolgen. Im letzteren Fall muss je nach Art des Gleitelementes der Dachlängsträger auf den Eckholmen bzw. Endstück der Gleitelemente horizontal angelenkt sein oder die Ausführung Gleitelement - Gleitschiene so gestaltet sein, dass ein gewisses Verwinden/Ausschwenken für eine Trapezstellung ermöglicht wird. Das kann durch ein größeres Spiel zwischen Gleitelement und Gleitschiene oder Auskränkung der Gleitschiene erfolgen. Vorzugsweise werden die vorderen Eckholme nicht mit ausgefahren, sondern verbleiben mit dem Frontportalelement als stabile Einheit. Das Frontportalelement ist dann als teleskopierender Träger ausgebildet, d.h. der Träger ist die Gleitschiene für das auszufahrende Gleitelement, oder eine entsprechende Gleitschiene wird dem Frontportalelement zugeordnet. Macht sich jedoch auch das Ausfahren der frontseitigen Eckholme erforderlich, so muss entweder das Frontportalelement lösbar mit dem Holm verbunden, das Frontportalelement am Fahrerhaus angebunden sein oder, wie eingangs durch DE 19 721 333 für Heckportalträger beschrieben, mit dem Dach bei Öffnung entfernt werden.

Während es vorteilhaft ist, die frontseitigen Eckholme nicht mit auszufahren, müssen die heckseitigen Eckholme mit dem Dachlängsträger ausgefahren werden, um die benötigte Breite zur heckseitigen Be-/Entladung zu gewährleisten. Der untere Heckquerträger ist teleskopierend ausgebildet (wie oben beschrieben), wobei der heckseitige Eckholm mit dem entsprechenden Gleitelement eine starre Verbindung aufweist. Für Sattelauflieger werden vorteilhafter Weise sowohl front- wie heckseitig die unteren Querträger teleskopierend gestaltet, so dass je nach Front- oder Heckbe-/entladung die Eckholme auszufahren sind.

Eine weitere **erfinderische** Variante besteht in einer Anlenkung der Eckholme an die Ladefläche. Die Dachlängsträger sind mit den Eckholmen starr verbunden. Mindestens ein Dachlängsträger kann mittels mindestens eines Eckholmes durch die Anlenkung ausgeschwenkt werden. Je nach Platzbedarf und Gestalt des Ladegutes kann der Schwenkwinkel bis zu 90 Grad und mehr betragen, d.h. bei einem seitlichen Ausschwenken von 90 Grad befindet sich der bzw. die Eckholme mit dem Dachlängsträger in einer gleichen Ebenen mit der Ladefläche. Der Winkel kann über 90 Grad erweitert werden, bis der Dachträger den Straßenboden berührt. Auch ist es nach der Erfindung möglich, die Anlenkung in senkrechte Gleitschienen anzuordnen, so dass der angelenkte Eckholm mit dem Dachlängsträger vertikal gesenkt werden kann. Die Variante Eckholmanlenkung ist auch für Sattelauflieger anwendbar

Nach dem Beladen werden die Dachlängsträger wieder in ihre funktionsbedingte Lage zurückgefahren, wobei sich die beiden Seitenplanen über die Überbreite des Ladegutes baucht und in diesem Zustand verzurrt werden. Die separaten Dachlaufschienen, die eine Verlängerung des Laufschienenprofils der Dachträger darstellen, können erfindungsgemäß nach Be-/Entladung und geschlossenem bzw. ggf. unvollständig geschlossenem Dach, eingeklappt werden.

Der Anspruch 5 beinhaltet die erfinderische Idee des Transportes überbreiter Güter auf Sattelauflieger, die insbesondere im abgestellten Zustand von der Front- oder Heckseite ohne Zugmaschine zu be-/entladen sind. Dazu ist es notwendig, die Eckholme als Doppelholme auszuführen, wobei die Dachlängsträger auf den jeweiligen Innenholmen der Doppelholme lagern. Jeder Eckholm kann als Doppelholm oder nur der Innenholm mit dem darauf liegenden Dachlängsträger quer zur Fahrzeuglängsachse ausgefahren werden. Die separaten Dachlaufschienen befinden sich an dem jeweiligen äußeren Holm der Doppelholme. Sowohl das Front- als auch Heckportalelement müssen lösbar und mit dem Dach bei Öffnung zu bewegen bzw. zu entfernen sein. Sonderkonstruktionen, bei denen der Dachlängsträger nur an einem Ende ausgefahren werden soll, bedürfen normalerweise keiner Doppelholme, und nur ein Portalelement ist beweglich zu gestalten.

Die separaten Dachlaufschienen sind einklappbar konstruiert und werden erst zur Dachaufnahme in eine annähernde horizontale Lage gebracht. Auch können die separaten Dachlaufschienen beim Dachschließvorgang mit dem Dach auf die seitlichen Dachlängsträger befördert werden. Bei den Konstruktionen für Sattelauflieger müssen selbstverständlich die separaten Dachlaufschienen vor Aufnahme des Daches abgesichert werden.
Die Bewegung des Daches, der separaten Dachlaufschienen sowie der Dachlängsträger ist manuell oder automatisch auszuführen. Der Antrieb kann beispielsweise mittels Druckmedien oder elektrisch in bekannter Weise erfolgen.

Die Erfindung soll an drei Beispielen und
- Fig. 1: Draufsicht auf ein Fahrzeug zur Beladung mit überbreitem Transportgut,
- Fig. 2: Draufsicht auf die mit überbreitem Transportgut beladene Ladefläche,
- Fig. 3: Draufsicht auf einen Sattelauflieger zur frontseitigen Beladung mit überbreitem Transportgut,
- Fig. 4: Seitenansicht von einem Sattelauflieger zur frontseitigen Beladung mit überbreitem Transportgut,
- Fig. 5: Heckansicht bei seitlich ausgefahren Eckholmen mit Dachlängsträgern,
- Fig. 6: Draufsicht auf ein Fahrzeug mit angelenkten Eckholmen,
- Fig. 7: Heckansicht bei seitlich ausgeschwenkten Eckholmen mit Dachlängsträgern näher erläutert werden, wobei die in der Bezugszeichenliste zusammengestellten Bezugszeichen verwendet werden.

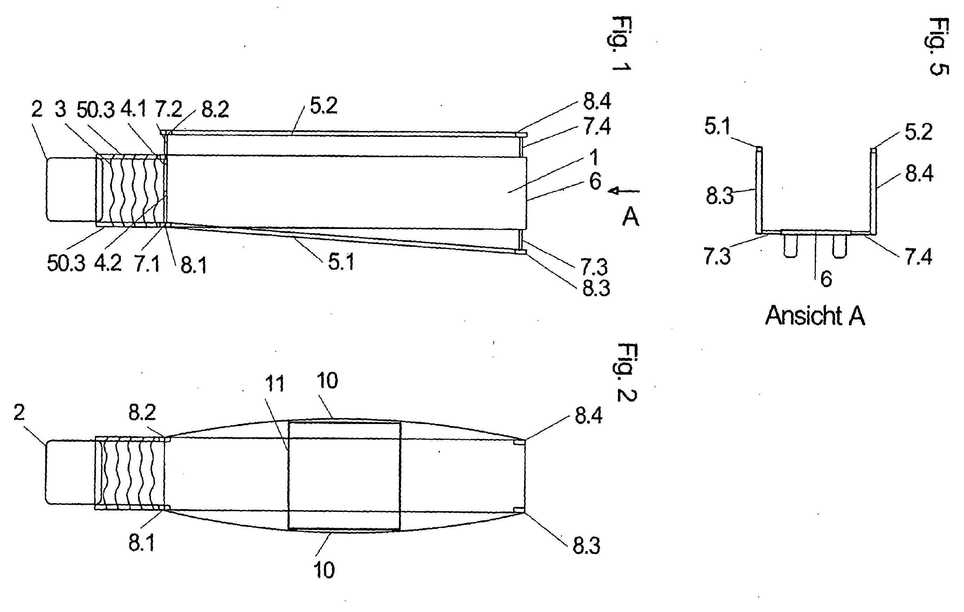

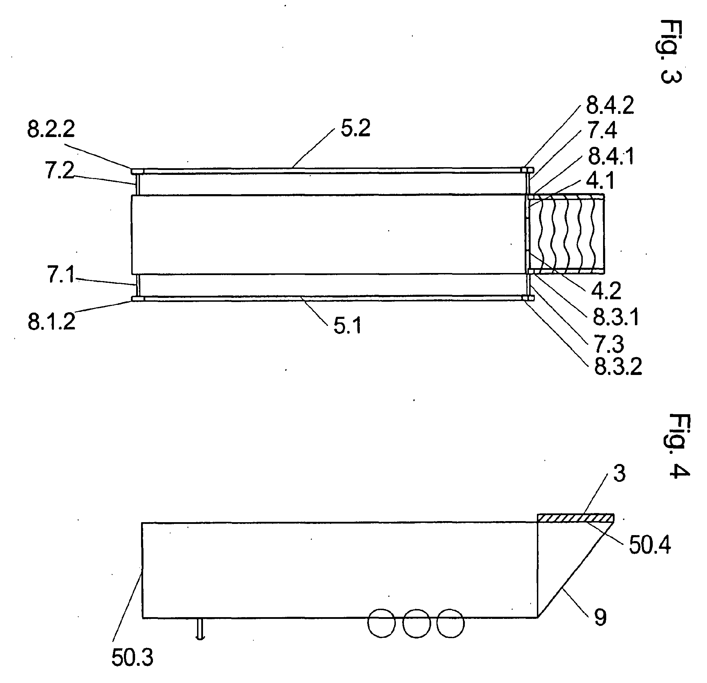

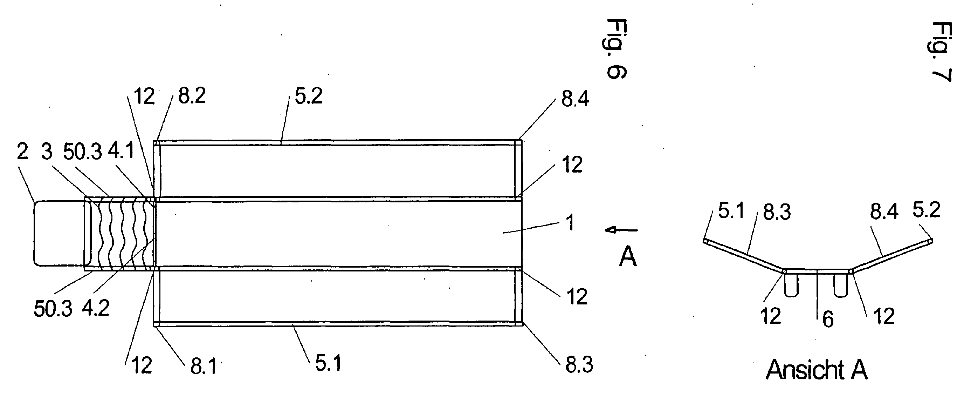

Beispiel 1 beschreibt ein Fahrzeug nach Fig. 1 mit einer Ladefläche 1 der Breite von 2550 mm sowie Planenabdeckung zum Transport eines überbreiten Ladegutes 11 mit einer Breite von 4000 mm in Bereitschaftsstellung zur Be- oder Entladung. Es ist mit Gleitelementen 7.1 bis 7.4 zum seitlichen Ausfahren der Dachlängsträger mit Dachlaufschienenprofil 5.1 und 5.2 ausgerüstet. Um front- und heckseitig die Träger 5.1 und 5.2 mit den Seitenplanen 10 ausfahren zu können, wird das Dach 3 mit dem beweglichen Heckportalelement 4.2 (wie in DE 19 721 333 beschrieben) über die Ladefläche 1 hinaus auf die frontseitigen separaten Dachlaufschienen 50.3, die sich über dem Fahrerhaus 2 als getrennte Verlängerungen der Dachlängsträger 5.1 und 5.2 befinden, automatisch ausgefahren. Die separaten Dachlaufschienen 50.3 sind ausklappbar am Frontportalelement 4.1 angelenkt. Die Dachlängsträger 5.1 und 5.2 weisen somit keine Bindung zum Dach 3 auf und sind seitlich auf eine Überbreite von insgesamt 4500 mm (Fig. 5) auszufahren. Die Dachlängsträger 5.1 und 5.2 ruhen heckseitig auf den Eckholmen 8.3 und 8.4, die wiederum auf den Gleitelementen 7.3 und 7.4 starr befestigt sind. Der untere Heckquerträger 6 ist als Gleitschiene für die Gleitelemente 7.3 und 7.4 ausgebildet (Fig. 5). Die frontseitige Lagerung der Dachlängsträger 5.1 und 5.2 geschieht vorteilhafter Weise auf den frontseitigen Gleitelementen 7.1 und 7.2, die als Gleitschiene das Frontportalelement 4.1 haben. Bei dieser Konstruktion bleiben die Eckholme 8.1 und 8.2 starr am unteren frontseitigen Querträger angebunden. Nach der Beladung werden die Dachlängsträger 5.1 und 5.2 mittels der Gleitelemente 7.1 bis 7.4 zurückgefahren, wobei die seitlichen Planen 10 sich am überbreiten Ladegut ausbauchen, wie Fig. 2 zeigt, und zu verzurren sind. Über die eingefahrenen Dachlängsträger 5.1 und 5.2 wird das Dach 3 mit dem Heckportalelement 4.2 in die funktionsbedingte Lage gebracht und die separaten Dachlaufschienen 50.3 seitlich nach innen eingeklappt. Die Ortsveränderungen der zu bewegenden Elemente geschieht automatisch in bekannter Weise. Der Entladevorgang verläuft ebenso wie die Vorbereitung zur Beladung.

Beispiel 2 beschreibt in Anlehnung an das Beispiel 1 einen Sattelauflieger zur front- oder heckseitigen Be-/Entladung überbreiter Ladegüter, wie in den Fig. 3 und 4 dargestellt. Die Eckholme 8.1 bis 8.4 sind als Doppelholme 8.1.1 bis 8.4.2 und die Portalelemente 4.1 und 4.2 beweglich konstruiert. An den äußeren Eckholmen 8.1.1, 8.2.1, 8.3.1 und 8.4.1 sind die separaten Dachlaufschienen 50.3 und 50.4 angelenkt. Auf den inneren Eckholmen 8.1.2, 8.2.2, 8.3.2 und 8.4.2 lagern die Dachlängsträger 5.1 und 5.2. Alle Eckholme 8.1.2 bis 8.4.2 sind starr mit den zugeordneten Gleitelementen verbunden und entsprechend in Gleitschienen geführt. Zur frontseitigen Be-/Entladung werden die an den heckseitigen Eckholmen 8.3.1 und 8.4.1 angelenkten separaten Dachlaufschienen 50.4 in annähernd horizontale Stellung aufgeklappt und durch die Abstützung 9, Fig. 4, abgesichert. Das Dach 3 mit dem von den Holmen 8.1.1 und 8.2.1 gelösten Frontportalelement 4.1 ist auf die heckseitig aufgeklappten Dachlaufschienen 50.4 zu lagern. Nunmehr können die Dachlängsträger 5.1 und 5.2 sowie die äußeren Eckträger 8.1.1 und 8.2.1 auf die benötigte Überbreite ausgefahren werden. Jeder äußere und innere Eckholm bedarf eines eigenständiges Gleitelementes. Die paarweise zugeordneten Gleitelemente besitzen je eine eigene Gleitschiene.
Bei der heckseitigen Be-/Entladung erfolgt der Vorgang zur Verbreiterung gegenläufig zur frontseitigen, d.h. das Heckportalelement 4.2 wird mit dem Dach 3 auf die aufgeklappten separaten Dachlaufschienen 50.3 gefahren und die Holme 8.1.2, 8.2.2 , 8.3.2, 8.4.2 mit dem darauf befindlichen Dachlängsträgern 5.1 und 5.2 sowie die äußeren heckseitigen Holme 8.3.1 und 8.4.1 mittels der zugeordneten Gleitelemente seitlich bewegt.

In Beispiel 3 werden, wie Fig. 6 und 7 zeigen, die Eckholme 8.1, 8.2, 8.3 und 8.4. an die Fahrgestellquerträger angelenkt 12. Die Dachlängsträger 5.1 und 5.2 sind mit den dazugehörigen Eckholmen 8.1 bis 8.4 starr verbunden. Für ein Be-/Entladung überbreiter Ladegüter 11 werden mittels der angelenkten Eckholme 8.1 bis 8.4 die Dachlängsträger ausgeschwenkt, bis sie die benötigte Ladefreiheit gewährleisten. Der Neigungswinkel kann je nach Bedarf kleiner, gleich oder größer 90 Grad betragen. Vorzugsweise erfolgt das Ausschwenken hydraulisch. Bei Doppeleckholmen 8.1.1 bis 8.4.2, wie es für Sattelauflieger zur beidseitigen Lademöglichkeit notwendig ist, sind die Doppeleckholme 8.1.1 bis 8.4.2 getrennt angelenkt.

### Bezugszeichenliste

- 1: Ladefläche
- 2: Fahrerhaus
- 3: Dach
- 4: Portalelement
- 4.1: Frontportalelement
- 4.2: Heckportalelement
- 5: Dachlängsträger
- 5.1: Dachlängsträger links
- 5.2: Dachlängsträger rechts
- 50: separate Dachlaufschienen
- 50.3: separate Dachlaufschienen frontseitig
- 50.4: separate Dachlaufschienen heckseitig
- 6: unterer Querträger als Gleitschiene
- 7: Gleitelement
- 7.1: frontseitiges Gleitelement links
- 7.2: frontseitiges Gleitelement rechts
- 7.3: heckseitiges Gleitelement links
- 7.4: heckseitiges Gleitelement rechts
- 8: Eckholm
- 8.1: frontseitiger Eckholm links
- 8.2: frontseitiger Eckholm rechts
- 8.3: heckseitiger Eckholm links
- 8.4: heckseitiger Eckholm rechts
- 8.1.1: frontseitiger äußerer Eckholm links als Bestandteil des Doppelholm
- 8.1.2: frontseitiger innerer Eckholm links als Bestandteil des Doppelholm
- 8.2.1: frontseitiger äußerer Eckholm rechts als Bestandteil des Doppelholm
- 8.2.2: frontseitiger innerer Eckholm rechts als Bestandteil des Doppelholms
- 8.3.1: heckseitiger äußerer Eckholm links als Bestandteil des Doppelholm
- 8.3.2: heckseitiger innerer Eckholm links als Bestandteil des Doppelholm
- 8.4.1: heckseitiger äußerer Eckholm rechts als Bestandteil des Doppelholm
- 8.4.2: heckseitiger innerer Eckholm rechts als Bestandteil des Doppelholm
- 9: Abstützung für Dachlaufschienen eines Sattelauflieger
- 10: Seitenplane
- 11: überbreites Ladegut
- 12: Anlenkung (Gelenk)

## Patentansprüche

1. Fahrzeug zum Transport überbreiter Güter mit Schiebe- oder Faltdach sowie seitlicher Planenwand und beweglichem Portalelement, **dadurch gekennzeichnet, dass**
- die beiden seitlichen Dachlängsträger (5.1+5.2) durch separate Dachlaufschienen (50) über die Ladefläche (1) hinaus verlängert sind,
- zur Be- oder Entladung überbreiter Ladegüter (11) das Dach (3) zur Dachöffnung über die Ladefläche (1) hinaus aufzufahren ist,
- das Portalelement (4) aus seiner funktionsbedingten Auflage zu entfernen ist,
- mindestens ein seitlicher Dachlängsträger (5), der Laufschienenprofil aufweist, zwischen der separaten Dachlaufschiene (50) und Eckholm (8) unterbrochen ist sowie
- mit mindestens einem Eckholm (8), einschließlich der Seitenplane, zu verbringen und somit die zur Be-/Entladung notwendige freie Breite gewährleistet ist
und
nach der Be-/Entladung
- die Originalbreite des Daches (3) durch Rückführung mindestens eines seitlichen Längsträgers (5.1 o. 5.2) wieder herzustellen ist,
- das Dach (3) gegebenenfalls zur Abdeckung der Ladefläche (1) zu schließen,
- das Portalelement (4) in seine funktionsbedingte Lage zurück zu versetzen und
- die durch das überbreite Ladegut (11) ausgebauchte Seitenplane (10) zu verzurren ist.

2. Fahrzeug zum Transport überbreiter Güter mit Schiebe- oder Faltdach sowie seitlicher Planenwand und beweglichem Portalelement, **dadurch gekennzeichnet, dass**
- die beiden seitlichen Dachlängsträger (5.1+5.2) durch separate Dachlaufschienen (50) über die Ladefläche (1) hinaus verlängert sind,
- zur Be- oder Entladung überbreiter Ladegüter (11) das Dach (3) zur Dachöffnung über die Ladefläche (1) hinaus aufzufahren ist,
- das Portalelement (4) aus seiner funktionsbedingten Auflage zu entfernen ist,
- mindestens ein seitlicher Dachlängsträger (5), der Laufschienenprofil aufweist, zwischen der separaten Dachlaufschiene (50) und Eckholm (8) unterbrochen ist und
- quer zur Fahrzeuglängsachse mittels mindestens eines an der Ladefläche angelenkten (12) Eckholms (8) bis zum Erreichen der zur Be-/Entladung notwendigen Breite seitlich auszuschwenken ist
und
nach der Be-/Entladung
- die Originalbreite des Daches (3) durch Rückführung mindestens eines seitlichen Längsträgers (5.1 o. 5.2) wieder herzustellen ist,
- das Dach (3) gegebenenfalls zur Abdeckung der Ladefläche (1) zu schließen ist,
- das Portalelement (4) in seine funktionsbedingte Lage zurück zu versetzen und die durch das überbreite Ladegut (11) ausgebauchte Seitenplane (10) zu verzurren ist.

3. Fahrzeug zum Transport überbreiter Güter mit Schiebe- oder Faltdach sowie seitlicher Planenwand und beweglichem Portalelement, **dadurch gekennzeichnet, dass**
- die beiden seitlichen Dachlängsträger (5.1+5.2) durch separate Dachlaufschienen (50) über die Ladefläche (1) hinaus verlängert sind,
- zur Be- oder Entladung überbreiter Ladegüter (11) das Dach (3) zur Dachöffnung über die Ladefläche (1) hinaus aufzufahren ist,
- das Portalelement (4) aus seiner funktionsbedingten Auflage zu entfernen ist,
- mindestens ein seitlicher Dachlängsträger (5), der Laufschienenprofil aufweist, zwischen der separaten Dachlaufschiene (50) und Eckholm (8) unterbrochen ist und
- quer zur Fahrzeuglängsachse, einschließlich mindestens eines Eckholmes (8) und der Seitenplane (10), bis über die Überbreite des Ladegutes (11) mittels mindestens eines Gleitelementes (7) auszufahren ist
und
nach der Beladung
- die Originalbreite des Daches (3) durch Rückführung mindestens eines seitlichen
- Längsträgers (5.1 o. 5.2) wieder herzustellen ist,
- das Dach (3) gegebenenfalls zur Abdeckung der Ladefläche (1) zu schließen ist,
- das Portalelement (4) in seine funktionsbedingte Lage zurück zu versetzen und
- die durch das überbreite Ladegut (11) ausgebauchte Seitenplane (10) zu verzurren ist.

4. Fahrzeug nach einem der vorhergehenden Ansprüche, **dadurch gekennzeichnet, dass**
- mindestens die hinteren oder vorderen Eckholme (8.3+8.4 o. 8.1+8.2) als Doppelholme ausgebildet sind,
- mindestens ein Dachlängsträger (5) auf Doppelholme (8.1.2+8.3.2 oder 8.2.2+8.4.2) lagert,
- an den Eckholmen (8) die separaten Dachlaufschienen (50) angelenkt sind,
- zum Dachöffnen und -ausfahren die separaten Dachlaufschienen (50) der vorderen oder hinteren Eckholme (8.1.1+8.2.1 oder 8.3.1+8.4.1) in die annähernde horizontale Position zu bringen sind und
- das Schiebe-/Faltdach (3) über die Ladefläche (1) hinaus aufzufahren ist.

5. Fahrzeug nach einem der Ansprüche 3 bis 4, **dadurch gekennzeichnet, dass**
- die vordere Halterung sowie das hintere Gleitelement (7) mindestens eines seitlichen Längsträgeres (5) in horizontal drehbar gelagert sind, sodass
- mindestens ein seitlicher Längsträger (5) parallel oder trapezförmig gegenüber der Fahrzeuglängsachse auszufahren ist.

6. Fahrzeug nach einem der Ansprüche 3 bis 5, **dadurch gekennzeichnet, dass** mindestens eine Gleitschiene zum Ausfahren mindestens eines Gleitelementes (7) unterhalb der Ladefläche angebracht ist.

7. Fahrzeug nach einem der Ansprüche 3 bis 6, **dadurch gekennzeichnet, dass**
die frontseitigen Gleitelemente (7.1 + 7.2) in mindestens einer Gleitschiene, die oberhalb des rechten und linken Eckholms (8.2+8.1) lagert, laufen.

8. Fahrzeug nach Anspruch 2, **dadurch gekennzeichnet, dass**
die Anlenkung (12) der Eckholme (8) in vertikal an der Bodengruppe angebundenen Gleitschienen befinden und abzusenken sind.

9. Fahrzeug nach einem der vorhergehenden Ansprüche, **dadurch gekennzeichnet, dass** die separaten Dachlaufschienen (50) bei geschlossenem oder unvollständig geschlossenem Dach (3) einzuklappen sind.

10. Fahrzeug nach einem der Ansprüche 1 bis 8, **dadurch gekennzeichnet, dass**
die separaten Dachleitvorrichtungen (50) beim Dachschließvorgang mit dem Dach (3) auf die seitlichen Dachlängsträger (5.1+5.2) zu befördert sind.

## Claims

1. A vehicle for the transport of over-wide goods that has a sliding or folding roof as well as a tarpaulin side wall and movable portal element, the characteristics of said vehicle being that
- both lateral longitudinal roof support-bars (5.1+5.2) are extended beyond the loading surface (1) by means of separate roof guide-rails (50),
- for loading or unloading over-wide pieces of freight (11), the roof (3) is to be raised up to the roof opening beyond the loading surface (1),
- the portal element (4) is to be removed from its functional mount,
- at least one lateral longitudinal roof support-bar (5), which has a guide-rail profile, is interrupted between the separate roof guide-rail (50) and the corner cross-bar (8) as well as
- to be furnished with at least one corner cross-bar (8), including the side tarpaulin, thus guaranteeing the open width necessary for loading and unloading
and
after loading/unloading
- the original width of the roof (3) is to be restored by running back at least one of the lateral longitudinal support-bars (5.1 or 5.2)
- the roof (3) is to be closed, or, if necessary, the loading surface (1) is to be covered,
- the portal element (4) is to be moved back into its functional position and
- the side tarpaulin (10) that has been bulged out by the over-wide piece of freight (11) is to be tied down.

2. A vehicle for the transport of over-wide goods that has a sliding or folding roof as well as a tarpaulin side wall and movable portal element, the characteristics of said vehicle being that
- both lateral longitudinal roof support-bars (5.1+5.2) are extended beyond the loading surface (1) by means of separate roof guide-rails (50),
- for loading or unloading over-wide pieces of freight (11), the roof (3) is to be raised up to the roof opening beyond the loading surface (1),
- the portal element (4) is to be removed from its functional mount,
- at least one lateral longitudinal roof support-bar (5), which has a guide-rail profile, is interrupted between the separate roof guide-rail (50) and the corner cross-bar (8) and
- by means of at least one of the corner cross-bars (8) that are tied to (12) the loading surface, is to be tilted out laterally crosswise to the vehicle's longitudinal axis until the width necessary for loading/unloading is reached
and
after loading/unloading
- the original width of the roof (3) is to be restored by running back at least one of the lateral longitudinal support-bars (5.1 or 5.2)
- the roof (3) is to be closed, or, if necessary, the loading surface (1) is to be covered,
- the portal element (4) is to be moved back into its functional position and the side tarpaulin (10) that has been bulged out by the over-wide piece of freight (11) is to be tied down.

3. A vehicle for the transport of over-wide goods that has a sliding or folding roof as well as a tarpaulin side wall and movable portal element, the characteristics of said vehicle being that
- both lateral longitudinal roof support-bars (5.1+5.2) are extended beyond the loading surface (1) by means of separate roof guide-rails (50),
- for loading or unloading over-wide pieces of freight (11), the roof (3) is to be raised up to the roof opening beyond the loading surface (1),
- the portal element (4) is to be removed from its functional mount,
- at least one lateral longitudinal roof support-bar (5), which has a guide-rail profile, is interrupted between the separate roof guide-rail (50) and the corner cross-bar (8) and
- is to be run out crosswise to the vehicle's longitudinal axis, including at least one corner cross-bar (8) and the side tarpaulin (10), beyond the over-width of the piece of freight (11) by means of at least one gliding element (7)
and
after loading
- the original width of the roof (3) is to be restored by running back at least one of the lateral longitudinal support-bars (5.1 or 5.2),
- the roof (3) is to be closed, or, if necessary, the loading surface (1) is to be covered,
- the portal element (4) is to be moved back into its functional position and
- the side tarpaulin (10) that has been bulged out by the over-wide piece of freight (11) is to be tied down.

4. A vehicle according to one of the previous claims, the characteristics of which being that
- at least the rear or front corner cross-bars (8.3+8.4 or 8.1+8.2) are formed as double cross-bars,
- at least one longitudinal roof support-bar (5) rests on double cross-bars (8.1.2+8.3.2 or 8.2.2+8.4.2),
- the separate roof guide-rails (50) are tied to the corner cross-bars (8),
- in order to open and run out the roof, the separate roof guide-rails (50) of the front and rear corner cross-bars (8.1.1+8.2.1 or 8.3.1+8.4.1) are to be brought into an almost horizontal position und
- the sliding/folding roof (3) is to be raised up beyond the loading surface (1).

5. A vehicle according to one of the claims 3 to 4, the characteristics of which being that
- the front mounting as well as the rear guiding element (7) of at least one of the lateral longitudinal support-bars (5) are rested horizontally and can be turned so that
- at least one lateral longitudinal support-bar (5) is to be run out parallel or trapezoidal to the vehicle's longitudinal axis.

6. A vehicle according to one of the claims 3 to 5, the characteristics of which being that at least one guide-rail for running out at least one guiding element (7) is mounted below the loading surface.

7. A vehicle according to one of the claims 3 to 6, the characteristics of which being that the front guiding elements (7.1+7.2) run in at least one guide-rail that rests above the right and left corner cross-bar (8.2+8.1).

8. A vehicle according to claim 2, the characteristics of which being that the tying element (12) of the corner cross-bars (8) is to be located vertically on the guide-rails tied to the floor group and lowered.

9. A vehicle according to one of the previous claims, the characteristics of which being that the separate roof guide-rails (50) are to be retracted when the roof (3) is closed or partially closed.

10. A vehicle according to one of the claims 1 to 8, the characteristics of which being that the separate roof guiding elements (50) are to be moved to the lateral longitudinal roof support-bars (5.1+5.2) when the roof (3) is being closed.

## Revendications

1. Muni d'un toit amovible ou pliant, ainsi que d'une paroi bâchée latérale et d'un élément du portail amovible, le véhicule de transport de marchandises ultra-larges est **caractérisé par**
- les deux supports longitudinaux latéraux du toit (5.1+5.2) sont prolongés vers l'extérieur par des rails séparés de réception du toit (50) au-dessus de la surface de chargement (1),
- pour le (dé)chargement de marchandises ultra-larges (11), l'ouverture du toit (3) s'effectue vers l'extérieur au-dessus de la surface de chargement (1),
- l'élément du portail (4) doit être déplacé de sa position fonctionnelle ordinaire,
- au moins un support longitudinal latéral du toit (5), avec un profil de rails de glissement, est coupé entre les rails séparés de réception du toit (50) et la transversale d'angle (8) ainsi que
- une largeur libre pour (dé)chargement est créée avec au moins une transversale d'angle (8), y compris la bâche latérale,
et
après le (dé)chargement
- la largeur initiale du toit (3) est rétablie en retirant au moins un support latéral longitudinal (5.1 ou 5.2),
- le toit (3), éventuellement, se referme pour recouvrir la surface de chargement (1),
- l'élément du portail (4) doit être remis dans sa position fonctionnelle initiale et
- les bâches latérales (10) doivent être tendues autour de la marchandise ultra-large à charger (11).

2. Muni d'un toit amovible ou pliant, ainsi que d'une paroi bâchée latérale et d'un élément du portail amovible, le véhicule de transport de marchandises ultra-larges est **caractérisé par**
- les deux supports longitudinaux latéraux du toit (5.1+5.2) sont prolongés vers l'extérieur par des rails séparés de réception du toit (50) au-dessus de la surface de chargement (1),
- pour le (dé)chargement de marchandises ultra-larges (11), l'ouverture du toit (3) s'effectue vers l'extérieur au-dessus de la surface de chargement (1),
- l'élément du portail (4) doit être déplacé de sa position fonctionnelle ordinaire,
- au moins un support longitudinal latéral du toit (5), avec un profil de rails de glissement, est coupé entre les rails séparés de réception du toit (50) et la transversale d'angle (8) ainsi que
- on doit ressortir latéralement, perpendiculairement à l'axe longitudinal du véhicule, au moins une transversale d'angle (8) liée à la surface de chargement (12), jusqu'à atteindre la largeur nécessaire pour le (dé)chargement
et
après le (dé)chargement
- on doit remettre la largeur initiale du toit (3) en retirant au moins un support latéral longitudinal (5.1 ou 5.2),
- le toit (3), éventuellement, doit être fermé pour protéger la surface de chargement (1),
- l'élément du portail (4) doit être remis dans sa position fonctionnelle initiale et la bâche latérale (10), tendue autour de la marchandise ultra-large à charger (11), doit être fixée.

3. Muni d'un toit amovible ou pliant, ainsi que d'une paroi bâchée latérale et d'un élément du portail amovible, le véhicule de transport de marchandises ultra-larges est **caractérisé par**
- les deux supports longitudinaux latéraux du toit (5.1+5.2) sont prolongés vers l'extérieur par des rails séparés de réception du toit (50) au-dessus de la surface de chargement (1),
- pour le (dé)chargement de marchandises ultra-larges (11), l'ouverture du toit (3) s'effectue vers l'extérieur au-dessus de la surface de chargement (1),
- l'élément du portail (4) doit être remis dans sa position fonctionnelle initiale,
- au moins un support longitudinal latéral du toit (5), avec un profil de rails de glissement, est coupé entre les rails séparés de réception du toit (50) et la transversale d'angle (8) ainsi que
- on doit ressortir latéralement, perpendiculairement à l'axe longitudinal du véhicule, au moins une transversale d'angle (8) et la bâche latérale (10) au-dessus de la marchandise ultra-large (11), à l'aide d'au moins un élément glissant (7)
et
après le chargement
- on doit remettre la largeur initiale du toit (3) en retirant au moins un support latéral longitudinal (5.1 ou 5.2),
- le toit (3), éventuellement, doit être fermé pour protéger la surface de chargement (1),
- l'élément du portail (4)doit être remis dans sa position fonctionnelle initiale et la bâche latérale (10) tendue autour de la marchandise ultra-large à charger (11) doit être fixée.

4. Le véhicule, conforme aux Objets du brevet ci-dessus, est **caractérisé par**
- au moins les transversales d'angle avant ou arrière (8.3+8.4 ou 8.1+8.2) sont formées comme transversales doubles,
- au moins un support longitudinal du toit (5) repose sur une transversale double (8.1.2+8.3.2 ou 8.2.2+8.4.2),
- les rails séparés de réception du toit (50) sont liés aux transversales d'angle (8),
- pour ouverture et déploiement du toit, les rails séparés de réception du toit (50) doivent être mis en position horizontale rapprochée par rapport aux transversales d'angle avant ou arrière (8.1.1 +8.2.1 ou 8.3.1 +8.4.1) et
- le toit amovible ou pliant (3) doit être déployé au-dessus de la surface de chargement (1).

5. Le véhicule, conforme aux Objets du brevet 3 à 4, est **caractérisé par**
- la fixation avant, ainsi que l'élément glissant arrière (7) d'au moins un support longitudinal latéral (5), sont mis en position horizontale variable, ainsi que
- au moins un support longitudinal latéral (5) doit être sorti parallèlement ou d'une manière trapézoïdale face à l'axe longitudinal du véhicule.

6. Le véhicule, conforme aux Objets du brevet 3 à 5, est **caractérisé par**
au moins un rail de glissement est adapté à la sortie d'au moins un élément glissant (7) sous la surface de chargem

7. Le véhicule, conforme aux Objets du brevet 3 à 6, est **caractérisé par**
les éléments glissants frontaux (7.1 + 7.2) suivent au moins un rail de glissement, qui repose au-dessus de la transversale d'angle droite ou gauche (8.2+8.1).

8. Le véhicule, conforme à l'Objet du brevet 2, est **caractérisé par**
la liaison (12) de la transversale d'angle (8) doit se trouver verticalement au rail de glissement fixé au plancher, pour pouvoir être descendue.

9. Le véhicule, conforme à l'un des Objets du brevet ci-dessus, est **caractérisé par**
avec le toit (3) fermé ou partiellement fermé, les rails séparés de réception du toit (50) doivent être fixés.

10. Le véhicule, conforme à l'un des Objets du brevet 1 à 8, est **caractérisé par**:
à la fermeture du toit (3), les éléments de direction du toit séparés (50) doivent être ramenés sur le support longitudinal latéral du toit (5.1+5.2).
